## Europäisches Patentamt
## European Patent Office
## Office européen des brevets

(19)

(11) Veröffentlichungsnummer: **0 034 311**
**B1**

(12)

# EUROPÄISCHE PATENTSCHRIFT

(45) Veröffentlichungstag der Patentschrift:
**21.11.84**

(51) Int. Cl.³: **B 23 P 1/12**

(21) Anmeldenummer: **81100840.0**

(22) Anmeldetag: **06.02.81**

(54) **Elektroerosive Bearbeitungseinrichtung.**

(30) Priorität: **13.02.80 CH 1184/80**

(43) Veröffentlichungstag der Anmeldung:
**26.08.81 Patentblatt 81/34**

(45) Bekanntmachung des Hinweises auf die Patenterteilung:
**21.11.84 Patentblatt 84/47**

(84) Benannte Vertragsstaaten:
**AT BE CH DE FR GB IT LI LU NL SE**

(56) Entgegenhaltungen:
**DE - A - 2 410 335**
**FR - A - 2 374 998**

(73) Patentinhaber: **Erowa AG, Winkelstrasse 8,
CH-5734 Reinach (CH)**

(72) Erfinder: **Liechti, Niklaus, Sandgasse 5,
CH-5734 Reinach (CH)**
Erfinder: **Schneider, Rudolf, Gondiswinkel,
CH-5734 Reinach (CH)**

(74) Vertreter: **Rottmann, Maximilian R., Hug Interlizenz AG
Alte Zürcherstrasse 49, CH-8903 Birmensdorf/ZH (CH)**

BUNDESDRUCKEREI BERLIN

## Beschreibung

Die Erfindung bezieht sich auf eine elektroerosive Bearbeitungseinrichtung nach dem Oberbegriff des Patentanspruchs 1.

Eine solche Bearbeitungseinrichtung in Form einer Funkenerodiermaschine ist bekannt aus der CH-PS 596 940. Hiernach wird eine dreidimensionale, relative Arbeitsbewegung der Werkzeugelektrode (im folgenden kurz »Elektrode« genannt) und der Werkstückelektrode (im folgenden kurz »Werkstück« genannt) in Form einer translatorischen Umlaufbewegung mit variabler Radialauslenkung und einer von dieser Radialauslenkung funktional abhängigen Axialverstellung (Z-Achse) verwirklicht.

Die FR-A-2 374 998 offenbart ein Verfahren zur elektroerosiven Bearbeitung von Werkstücken, die eine ähnliche Einrichtung verwendet.

Bei der bekannten Bearbeitungseinrichtung und beim bekannten Verfahren sind für die verschiedenen Achsen des räumlichen Koordinatensystems und die entsprechenden Komponenten der relativen Arbeitsbewegung zwischen Elektrode und Werkstück gesonderte Stellmotoren mit zugehöriger Antriebssteuerung und mit einem übergeordneten Steuersystem vorgesehen. Damit lassen sich allgemein zylindrische und kegelförmige Formgebungsflächen als Hüllflächen der entsprechend bewegten Elektrodenoberfläche verwirklichen, darüber hinaus auch gewisse Symmetriebedingungen genügende räumliche Flächen, insbesondere Kugelflächen.

Bei neuzeitlichen Funkenerosions-Bearbeitungsverfahren tritt jedoch das Problem auf, umfangreiche Formgebungs- oder Elektrodenbewegungs-Hüllflächen durch eine Abfolge von elementaren Arbeits- bzw. Vorschubschritten entsprechend einer auf Kegelflächen oder Schrägflächen zur Hauptvorschubrichtung verlaufenden Arbeitsbewegung durch die einzelnen Oberflächenpunkte der Elektrode herzustellen. Ein solches komplexes Verarbeitungsverfahren, bei dem die Formgebungsfläche die Hüllfläche der elementaren Arbeitsbewegungsflächen aller zur Wirkung gelangten Elektroden-Oberflächenpunkte darstellt, erfordert Steuerfunktionen für die einzelnen Koordinatenachsen bzw. Vorschubkomponenten, die sich mit der bekannten Einrichtung nicht verwirklichen lassen. Dies gilt weiterhin auch für bestimmte, im wesentlichen zweidimensionale Arbeitsbewegungen, für die anstelle einer durchgehenden Umlaufbewegung eine selektive Fixierung bestimmter Winkelstellungen innerhalb der Umlaufbewegung erforderlich ist. Auch bei solchen Arbeitsbewegungen, die also beispielsweise in einer bestimmten Axial-Radialebene ablaufen, kommt eine komplexe Arbeitsweise der vorgenannten Art in Betracht, also beispielsweise durch Aneinanderreihung oder Überlagerung von fortschreitenden Arbeitsschritten von jeweils vergleichsweise geringem Elementarhub mit gegen die Axial- und Radialrichtung geneigtem Elektrodenvorschub. Auch hier wird die gesamte Formgebungsfläche wieder durch die Hüllfläche oder Tangentialfläche der Elektroden-Oberflächenpunkte in ihren maximalen Hubstellungen bestimmt.

Auch die DE-A-2 410 335 beschreibt zwar eine Einrichtung zur dreidimensionalen, elektroerosiven Bearbeitung von Werkstücken, die jedoch den zuvor genannten Forderungen nicht in allen Beziehungen zu genügen vermag.

Aufgabe der Erfindung ist daher die Schaffung einer Einrichtung zur elektroerosiven Werkstückbearbeitung, die sich durch hohe Anpassungsfähigkeit der Ablaufsteuerung für mehrdimensionale und insbesondere aus kegelförmigen oder geneigten Elementarbewegungen zusammengesetzte Arbeits- und Zustellbewegungen mit ihren verschiedenen Kombinationsmöglichkeiten auszeichnet. Die erfindungsgemäße Lösung dieser Aufgabe kennzeichnet sich bei einer Einrichtung der eingangs erwähnten Art durch die im Patentanspruch 1 angegebenen Merkmale.

Dabei wird unter »zweiter Arbeitsbewegung« bzw. »zweiter Arbeitsrichtung« jede Bewegung bzw. Richtung im Winkel zur ersten Arbeitsbewegung verstanden, z. B. eine Radialzustellung in einer bestimmten Richtung oder auch eine dieser Radialzustellung überlagerte Umlaufbewegung, die als seitliche Fortschaltung des Zustellwinkels betrachtet werden kann.

Die bei der erfindungsgemäßen Problemlösung vorgesehenen, gesonderten Zuordnungs-Funktionsgeber für verschiedene Schrägerosionswinkel bzw. Axial-Radial-Zustellungsverhältnisse erlauben es, unter Ausnutzung der Flexibilität einer datentechnischen Einrichtung einerseits optimale Bearbeitungsverhältnisse für die Kegel- oder Schräg-Elementarbewegungen einzustellen, während andererseits beliebige Hüllformen mit vorgegebenem und gegebenenfalls auch in Abhängigkeit vom Fortschritt des Bearbeitungsvorganges bzw. des axialen Vorschubes variablem Schrägwinkel verwirklicht werden können.

Weitere Einzelheiten und Vorteile der Erfindung werden anhand der in den Zeichnungen dargestellten Ausführungsbeispiele erläutert. Hierin zeigt

Fig. 1 einen Übersichtplan einer Erosionsmaschine in schematisch-perspektivischer Darstellung, einschließlich der Antriebs- und Steuer- bzw. Regeleinrichtungen für dreidimensionale Arbeits- bzw. Zustellbewegungen,

Fig. 2a und Fig. 2b den Wirkschaltplan der Zeitablaufsteuerung für die Arbeitsbewegungen einer Maschine nach Fig. 1,

Fig. 3 den Prinzipschaltplan einer anderen Ausführung einer Antriebseinrichtung mit zweiachsiger Koordinatensteuerung für in einer Ebene liegende Arbeitsbewegungskomponenten,

Fig. 4 den Prinzipschaltplan einer Antriebseinrichtung mit dreiachsiger Koordinatensteuerung für räumliche Arbeitsbewegungen,

Fig. 5 eine in bezug auf Fig. 2b abgewandelte

Schaltung für die Radialrückstellung zur periodischen Schrägerosion und

Fig. 6 eine weitere Schaltungsvariante für die Radialrückstellung zur periodischen Schrägerosion, und zwar in Verbindung mit einer abgewandelten Schaltung zur Überlagerung der Formgebungsregelung mit der Erosionsspannungsregelung.

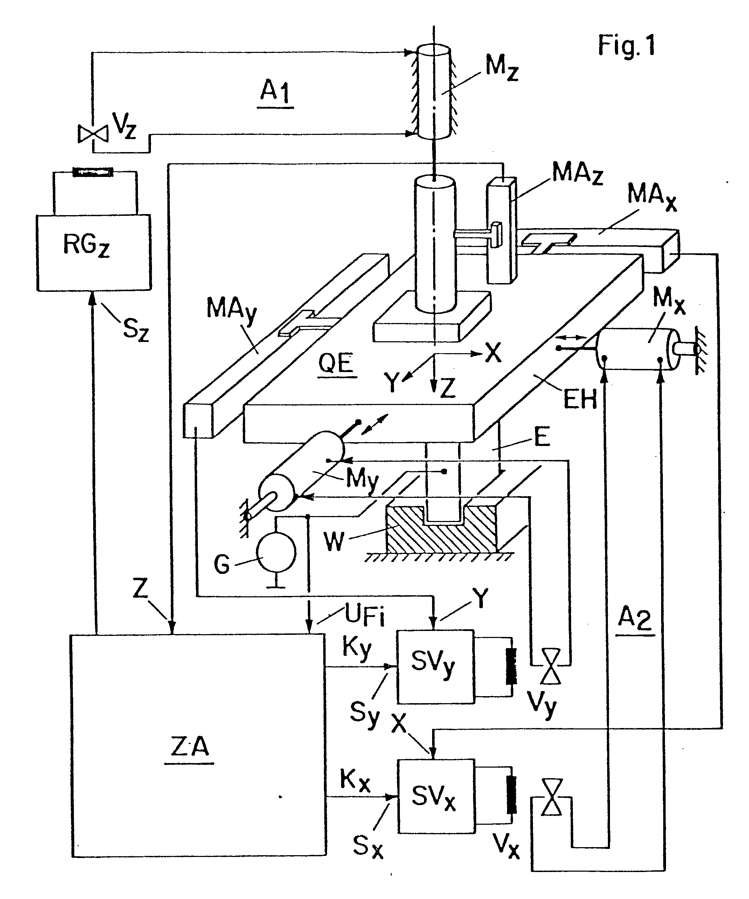

Die Ausführung nach Fig. 1 weist eine dreidimensional entsprechend den rechtwinkligen Koordinaten X, Y und Z verschiebbar gelagerte Elektrodenhalterung EH auf. Eine erste Antriebseinrichtung $A_1$ ist für die Z-Achse und eine zweite Antriebrichtung $A_2$ für die X- und Y-Achse in der Querebene QE vorgesehen. Eine schematisch angedeutete Elektrode E wird gegen ein ortsfestes Werkstück W zugestellt, wobei ein Generator G die elektrische Funkenenergie liefert. Die zwischen Elektrode und Werkstück herrschende Erosionsfunkenspannung $U_{Fi}$ ist ein Maß für die Erosionsspaltbreite als Istwert eines noch zu erläuternden Regelkreises und wird ebenso wie das Z-Signal einer gemeinsamen Zeitablaufsteuerung ZA zugeführt, die über ausgangsseitige Steuerkanäle $K_x$ und $K_y$ Weg-Steuersignale $S_x$ und $S_y$ als Sollwerte an Vergleicher $SV_x$ bzw. $SV_y$ eines X- bzw. Y-Hilfsregelkreises der zweiten Antriebseinrichtung $A_2$ liefert. Diesen Vergleichern werden außerdem als Istwerte die X- bzw. Y-Signale zugeführt, woraus in nicht näher zu erläuternder, an sich üblicher Weise Sollwert-Istwert-Differenzsignale und Stellgrößensignale zur Steuerung von Servoventilen $V_x$ bzw. $V_y$ mit nachgeordneten Linear-Stellmotoren $M_x$ bzw. $M_y$ erzeugt werden. Die X-, Y- und Z-Signale werden von mit der Elektrodenhalterung EH in Wirkverbindung stehenden Weg-Meßaufnehmern $MA_x$, $MA_y$, $MA_z$ gebildet. Der Z-Stellmotor $M_z$ wird von der Zeitablaufsteuerung ZA über ein Servoventil $V_z$ mit vorgeschaltetem Regler $RG_z$ als Ausgangsglied eines zugehörigen Regelkreises gesteuert.

Die Relativbewegungskomponenten zwischen Elektrode und Werkstück in Z-Richtung werden als »erste Arbeitsbewegung«, diejenige in der Querebene QE als »zweite Arbeitsbewegung« bezeichnet.

Unter der Wirkung der Zeitablaufsteuerung ZA führen die Stellmotoren $M_x$ und $M_y$ oszillierende Bewegungen entsprechend dem Zeitverlauf der Steuersignale $S_x$ und $S_y$ aus — für eine kreisförmige Bewegungsbahn ist dieser Zeitverlauf sinusförmig — und erhalten entsprechend dem räumlichen Winkel von 90° zwischen der X- und Y-Bewegungskomponente eine zeitliche Verschiebung ihrer Oszillationsperioden. Bei geeigneter Führung der Elektrodenhalterung gegen Verdrehung in der Querebene QE ergibt sich so eine kreisförmige, translatorische Umlaufbewegung als zweite Arbeitsbewegung. Für zweite Arbeitsbewegungen in einer bestimmten Radialrichtung kann der Umlaufwinkel innerhalb der Ebene QE auf einen vorgegebenen Wert fixiert werden.

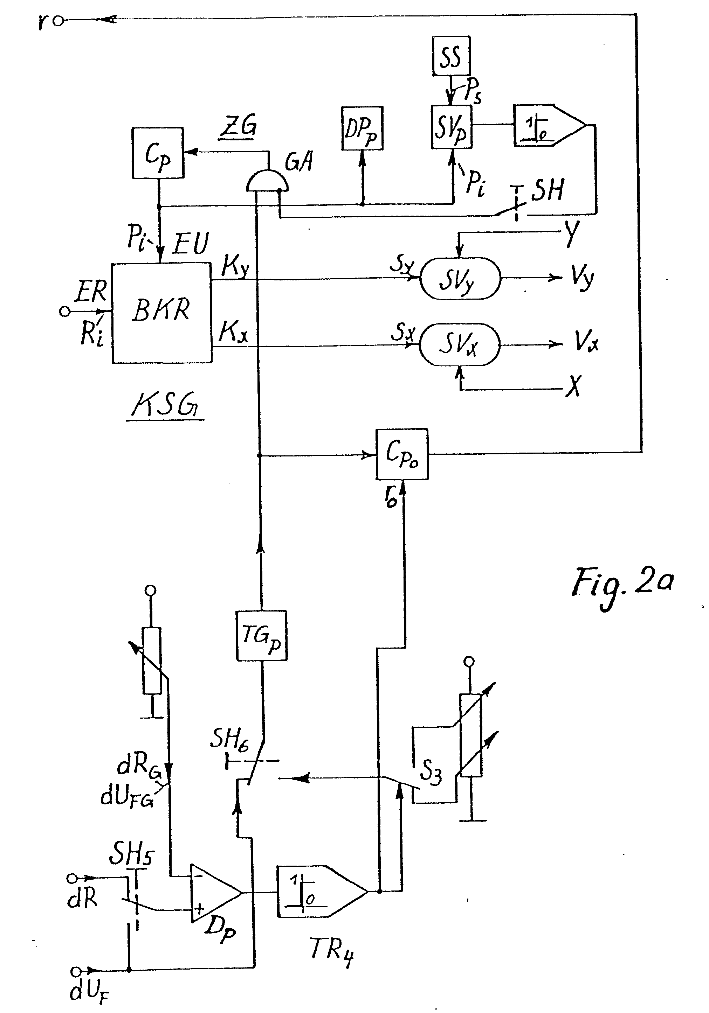

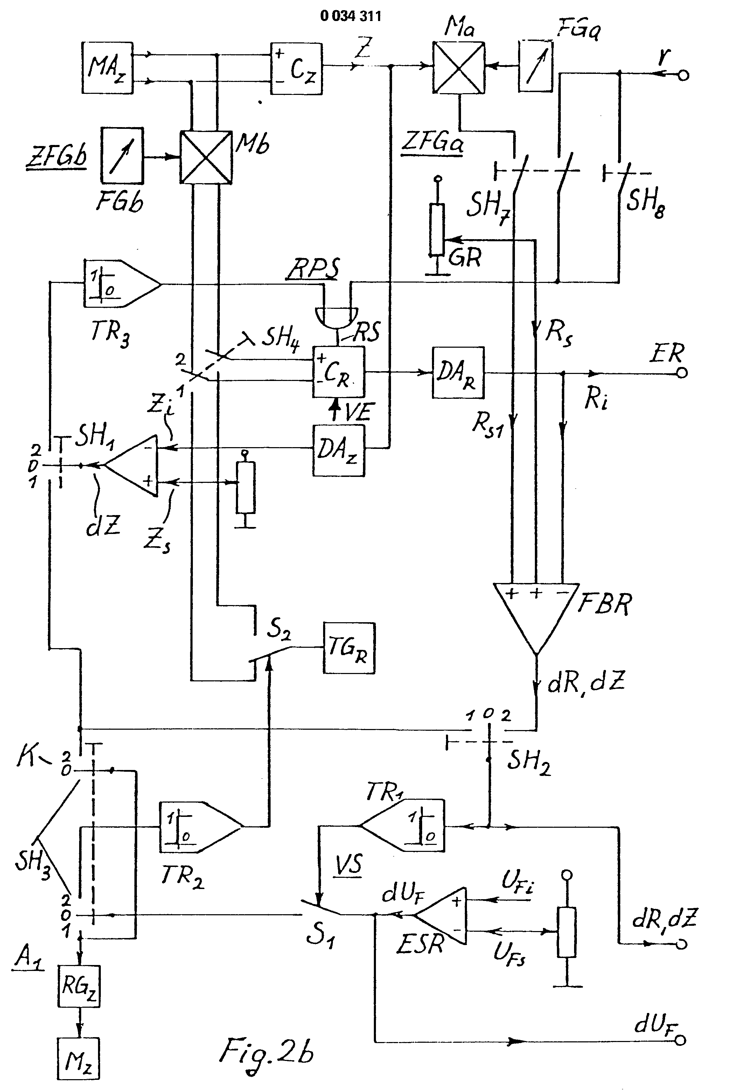

Innerhalb der in Fig. 2a und 2b dargestellten Zeitablaufsteuerung ZA ist ein Kreisbahn-Steuersignalgenerator KGS mit einem Bewegungsbahn-Komponentenrechner BRK vorgesehen, der einen Radiussteuereingang ER und einen Umlaufwinkelsteuereingang EU aufweist und an seinen Ausgangs-Steuerkanälen $K_x$ und $K_y$ um 90° gegeneinander phasenverschobene Steuersignale $S_x$ und $S_y$ liefert. Die absolute Phasenlage und damit der Augenblickswert des Umlaufwinkels wird als Istwert $P_i$ von einem Zeitgeber ZG bestimmt und im Betrieb laufend forgeschaltet. Der Zeitgeber umfaßt dazu einen Taktgeber $TG_p$ mit nachgeordnetem Zähler $C_p$, der das Istwertsignal $P_i$ für den Steuereingang EU bildet. Dieses Signal wird einer Anzeigevorrichtung $DP_p$ sowie einem Sollwert-Istwertvergleicher $SV_p$ zugeführt, der außerdem mit einem Umlaufwinkel-Sollwert von einem handbetätigbaren Sollwertsteller SS mit Anzeigevorrichtung beaufschlagt wird und in Abhängigkeit von der Betätigung eines Handschalters SH über ein Sperr-UND-Gatter GA bei Erreichen des Sollwertes die Fortschaltung des Umlaufwinkels stillsetzt. Auf diese Weise läßt sich ein beliebiger Umlaufwinkel — gegebenenfalls als Startpunkt für den Bearbeitungsvorgang oder für eine Bearbeitung in einer wählbaren Vertikalebene — stationär einstellen.

Mit der dargestellten Zeitablaufsteuerung läßt sich eine Zustellregelung sowohl in Radialrichtung parallel zur Ebene QE wie auch in Z-Richtung jeweils für sich oder in gegenseitiger Abhängigkeit ausführen, wobei jedenfalls eine Überlagerung mit einer Erosionsspaltregelung in Abhängigkeit von einem Sollwert-Istwertvergleich der Erosionsfunkenspannung vorgenommen wird.

Für alleinige Z-Regelung werden die Handschalter $SH_1$, $SH_2$ und $SH_3$ in die Stellung 1 gebracht, wobei ein von einem incremental wirkenden Z-Meßaufnehmer $MA_z$ gesteuerter Zähler $C_z$ über einen Digital-Analogwandler $DA_z$ ein Istwertsignal $Z_i$ für den Vergleich mit einem vorgebbaren Sollwertsignal $Z_s$ zur Bildung eines Differenzsignals dZ liefert. Letzteres wird durch einen Trigger $TR_1$ binärisiert und durch eine Vergleichsschaltung VS mit einem Schalter $S_1$ bei Erreichen des Sollwertes, d. h. bei Regelabweichungswerten kleiner oder gleich Null, zur Wirkung auf den Z-Stellmotor $M_z$ gebracht, und zwar vorrangig gegenüber einem positiven Differenzsignal $dU_F$ aus der Erosionsfunkenspannung $U_{Fi}$ als Istwert und einem vorgegebenen Sollwert $U_{Fs}$. Das Signal $dU_F$ ist somit das Regelabweichungssignal der Funkenspannungs- bzw. Erosionsspaltregelung. Umgekehrt wirkt das verschwindende oder negative Signal $dU_F$ vorrangig gegenüber einem positiven Differenzsignal dZ, weil bei geschlossenem Schalter $S_1$ über den in Stellung 1 befindlichen Handschalter $SH_3$ der Z-Stellmotor $M_z$ stillgesetzt bzw. bei Sollwertunterschreitung der Funkenspannung auf Rückstellung gesteuert wird. Es bleibt also in jedem Fall ein ausreichender Erosionsspalt erhalten, während andererseits die Erosion bei Erreichen eines vorgegebenen Z-Wertes unterbrochen wird.

Damit ist eine selbsttätige Grenzwertregelung des erosiven Bearbeitungsvorganges gemäß vorgegebenen geometrischen Grenzwerten erreicht, d. h. eine Formgebungsregelung des Bearbeitungsvorganges, in Überlagerung mit einer laufenden Erosionsspaltregelung, im Beispielsfall durch Erfassung der Erosionsfunkenspannung als gemessener Istwert und Vergleich mit einem vorgegebenen Soll- oder Grenzwert, dessen Unterschreitung eine zu korrigierende Abnahme der Spaltbreite kennzeichnet. Die Überlagerung der beiden Regelungen erfolgt in der Weise, daß jeweils die kritischere der beiden Regelabweichungen vorrangig Zugriff auf das korrigierende Stellglied erhält. Wenn also die Regelabweichung der Formgebungsregelung den Wert Null oder einen negativen Wert (letzteres im Sinne einer zu weit fortgeschrittenen Werkstoffabtragung) annimmt, so wird der Vorschub beendet oder auf Rücklauf umgeschaltet, und zwar unabhängig von der etwa noch weiteren Zuschub zulassenden Regelabweichung der Erosionsspaltregelung. Entsprechendes gilt umgekehrt, wobei die Werkstoffabtragung bei einer Korrekturvergrößerung des Erosionsspaltes selbstverständlich fortdauert. Der Erosionsspalt vergrößert sich dadurch fortschreitend, so daß der Vorschub und die fortschreitende Annäherung an den Formgebungs-Sollwert seinen Fortgang nehmen kann.

Wie anhand einer weiter unten noch zu erläuternden Abwandlung gezeigt wird, kann die Formgebungsregelung insbesondere auch so ausgestaltet werden, daß bei verschwindender oder negativer Regelabweichung nicht nur ein Stillsetzen, sondern eine Rückstellung mit Umkehrung der Vorschubbewegung eintritt. Weiterhin ist es im allgemeinen zweckmäßig, für beide Regelkreise gemäß dem Kriterium einer Kleinst- oder Größtwertauswahl — jeweils im Sinne einer bevorzugten Korrektur der kritischeren Regelbedingungen — ständig die Zugriffsmöglichkeit auf das korrigierende Stellglied aufrechtzuerhalten.

Für eine Radialzustellungsregelung werden die Schalter $SH_1$ bis $SH_3$ in ihre Stellung 0 oder 1 ($SH_1$) bzw. 2 ($SH_2$) bzw. 2 ($SH_3$) gebracht, weiterhin ein zusätzlicher Handschalter $SH_4$ in Stellung 1. Ein Radialzustellungs-Taktgeber $TG_R$ beaufschlagt dann in Abhängigkeit vom Zustand eines Umschalters $S_2$, der von dem im Trigger $TR_2$ binärisierten Ausgangssignal $dU_F$ der Vergleichsschaltung VS gesteuert wird, einen Radialzähler $C_R$ in zunehmender oder abnehmender Zählrichtung, d. h. in Richtung zu- oder abnehmenden Wertes für den Radialausschlag R der translatorischen Umlaufbewegung. So lange die Spannung $U_{Fi}$ ihren Soll- oder Grenzwert $U_{Fs}$ nicht unterschritten hat, nimmt also der in $C_R$ eingezählte Radial-Istwert $R_i$ zu, weil dieser Istwert — nach Durchlaufen eines Digital-Analogwandlers $DA_R$ und Vergleich mit einem vorgegebenen Sollwert $R_s$ sowie Bildung eines entsprechenden Differenzsignals dR — über den Schalter $SH_2$ und den Trigger $TR_1$ bis zum Erreichen seines Sollwertes $R_s$ den Schalter $S_2$ in Aufwärtszählrichtung hält.

Bei Erreichen oder Überschreiten des Sollwertes wird die Zunahme von $R_i$ beendet, ebenso bei Sollwertunterschreitungen der Erosionsfunkenspannung. Der Radialsollwert $R_s$ wird an einem Geber GB eingestellt, der Bestandteil eines ersten Zuordnungs-Funktionsgebers ZFGa ist. Letzterer bestimmt in diesem einfachsten Sonderfall die Zuordnung: $R_i$ unabhängig von $Z_i$ = constant.

Bei einer solchen R-Regelung kann die Z-Regelung für eine gesonderte Tiefeneinstellung des Werkzeugs als Nachlauf- oder Stellungs-Hilfsregelkreis zur Wirkung gebracht werden. Hierzu wird $SH_1$ in Stellung 1 gebracht und über einen zusätzlichen Kontakt K des Schalters $SH_3$ der Eingang von $A_1$ über $SH_1$ mit dZ beaufschlagt. Dadurch wird Zi auf einen vorgebbaren Sollwert Zs eingeregelt.

Für kombinierte Z- und R-Zustellregelung kommt zunächst der zweite Zuordnungs-Funktionsgeber ZFGb zur Wirkung, Schalter $SH_4$ wird hierzu in Stellung 2, Schalter $SH_3$ dagegen in Stellung 1 gebracht, während $SH_2$ in Stellung 2 verbleibt und $SH_1$ in Stellung 0 gebracht wird. Zähler $C_R$ wird dann durch ZFGb mit seinem einstellbaren Funktionsgenerator FGb und dem hiervon faktorgesteuerten Multiplikator $m_b$ mit den entsprechend modifizierten Zi-Werten beaufschlagt, so daß sich $R_i$ in vorgegebener Abhängigkeit von $Z_i$ ändert, z. B. in festem Verhältnis. Die Regelung erfolgt wieder mit dem Sollwert $R_s$, der dann gleichzeitig einen Z-Sollwert darstellt, während als Stellglied die erste Antriebseinrichtung mit $RG_z$ und $M_z$ wirksam ist, wie vorher in Überlagerung mit der Erosionsfunkenspannungsregelung.

Bei Stellung 2 des Schalters $SH_1$ kann weiterhin mittels dZ über einen weiteren Trigger $TR_3$ der R-Zähler $C_R$ bis zum Erreichen eines vorgegebenen Z-Sollwertes durch Beaufschlagung eines Rückstell- oder Blockiereinganges RS in Nullstellung gehalten werden, worauf sich die soeben erläuterte, kombinierte R- und Z-Zustellregelung mit geneigtem Erosionsfortschritt anschließt. Es kann also bis zu einer bestimmten Tiefe allein axial, sodann aber schräg erodiert werden. Entsprechendes läßt sich durch gegensinnige Voreinstellung des Zählers $C_R$ an einem besonderen Eingang VE erreichen, wobei vor dem Wirksamwerden der $R_i$-Zunahme zuerst die einer bestimmten Axialstellung entsprechende Voreinstellung durchlaufen werden muß.

Nach Erreichen des R-Sollwertes erfolgt Rückstellung von $C_R$ mittels eines vom Zähler $C_{Po}$ gelieferten Rückstellsignals r, das über einen in diesem Fall zu schließenden Handschalter $SH_8$ zum Rückstelleingang RS von $C_R$ gelangt. Dazu wird $C_{Po}$ durch ein Stellsignal $r_o$ auf einen vorgegebenen Umlaufwinkel $P_o$ voreingestellt, von dem aus bis Null und Auslösung des Rückstellsignals r abwärts gezählt wird. Dieser Umlaufwinkel bestimmt eine Mindestdauer für die Unterschreitung eines vorgegebenen, geringen Grenzwertes $dR_G$ der Radial-Sollwert-Istwertdifferenz oder eines entsprechenden Grenzwertes $dU_{FG}$

der Funkenspannungs-Sollwert-Istwertdifferenz als Rückstellbedingung für $C_R$. Beide Kriterien können je nach Anwendungsgegebenheiten als Auslösegrößen für den Beginn eines neuen Schrägerosionszyklus verwendet werden. Die Auswahl erfolgt mittels eines Handschalters $SH_5$. Das Stellsignal $r_o$ wird demgemäß vom Trigger $TR_4$ unter Ansteuerung von dR bzw. $dU_F$ über einen Differenzverstärker $D_P$ erzeugt. Demgemäß bildet der Radialzähler $C_R$ mit den zugehörigen Steuerelementen eine Repetitionsschaltung (hier insgesamt mit RPS bezeichnet) zur Auslösung aufeinanderfolgender Schrägerosionszyklen. Die Hüllfläche ist im einfachsten Fall prismatisch oder allgemein-zylindrisch, wobei die Radialabmessung durch die Einstellung von $R_S$ an GR im ersten Zuordnungs-Funktionsgeber ZFGa bestimmt ist.

Durch Betätigen eines weiteren Handschalters $SH_7$ kann ferner der erste Zuordnungs-Funktionsgeber ZFGa in der Weise aktiviert werden, daß nunmehr mit von $Z_i$ nach einer einstellbaren Funktion abhängiger Radialauslenkung gearbeitet wird. Damit lassen sich bei periodischer Schrägerosion weitgehend beliebige Hüllflächen einstellen. Hierzu wird eine zusätzliche, von der Rückstellung des Zählers $C_R$ unabhängige, jedoch von $Z_i$ abhängige Radial-Sollwertkomponente $R_{sl}$ in die Bildung der Sollwert-Istwertdifferenz dR eingeführt. Diese Komponente wird in Abhängigkeit von $Z_i$ über einen faktorsteuerbaren Multiplikator Ma — im Beispielsfall ein multiplizierender Digital-Analogwandler — in Verbindung mit einem Funktionsgeber FGa erzeugt. Dies ergibt die Möglichkeit, insbesondere allgemein konische Formgebungs- bzw. Hüllflächen mit unterlagerter, periodischer Schrägerosion herzustellen, wobei die Neigung bzw. der Konuswinkel der periodischen Schrägerosion unabhängig von der Hüllflächenform einstellbar ist.

Weiterhin sind für den Umlaufwinkel-Taktgeber $TG_P$ verschiedene Steuerungsmöglichkeiten im Sinne einer Veränderung der Umlaufwinkelgeschwindigkeit in Abhängigkeit von Radialausschlag der Umlaufbewegung bzw. von der Erosionsspannung als Maß für die Erosionsspaltbreite vorgesehen. Zunächst kann die Umlaufwinkelgeschwindigkeit über den Trigger $TG_4$ bei Grenzwertunterschreitungen Differenz »Sollwert minus Istwert« der Funkenspannung oder des Radialausschlages mittels eines automatisch betätigten Umschalters $S_3$ auf einen einstellbaren Wert herabgesetzt werden. Außerdem erlaubt ein Handschalter $SH_6$ den Übergang auf stetige Veränderung der Umlaufgeschwindigkeit, und zwar im Beispiel nur in Abhängigkeit von der Funkenspannungs-Sollwert-Istwertdifferenz. Auch für stetige Regelung der Umlaufwinkelgeschwindigkeit kommen jedoch grundsätzlich beide Abhängigkeiten in Betracht. Zweck dieser Regelung der Umlaufwinkelgeschwindigkeit ist hauptsächlich die Einsparung von Bearbeitungszeit, indem Umlaufwinkelbereiche, die keines oder nur geringen Werkstoffabtrages bedürfen, im Vergleich zu den Bereichen mit noch ausstehendem Abtrag schneller durchlaufen werden.

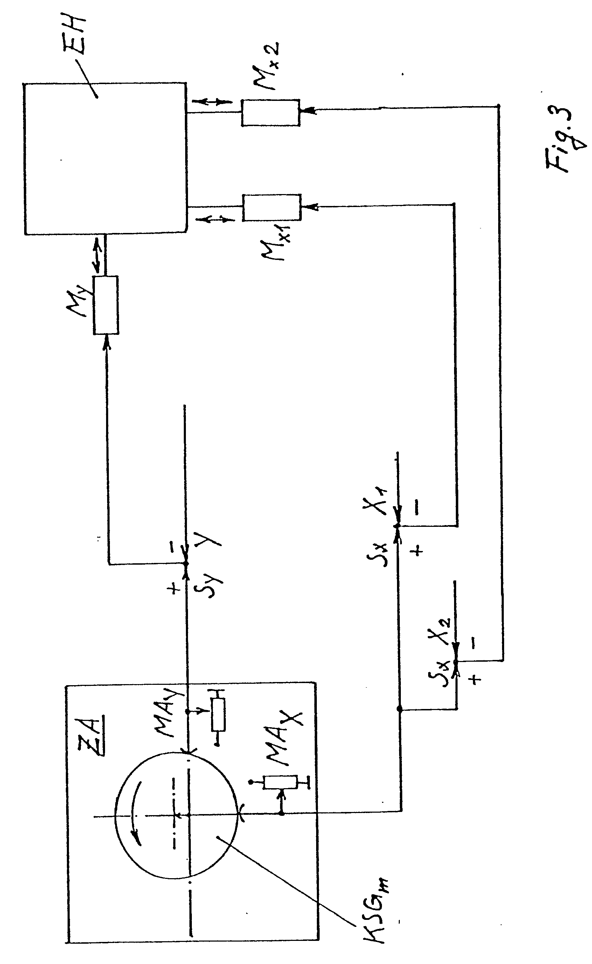

Fig. 3 zeigt einen mechanischen Kreisbahn-Steuersignalgenerator $KSG_m$ mit rotierendem Exzenter als Phasenwinkel- und Radiusgeber innerhalb einer Zeitablaufsteuerung ZA. Die Steuersignale $S_x$ und $S_y$ werden mit zwei Meßfühlern $M_x$ und $M_y$ am Exzenter abgenommen und auf Hilfsregelkreise der bereits erläuterten Art übertragen. Im Beispielsfall sind ferner zwei parallelgeschaltete Stellmotoren $M_{x1}$ und $M_{x2}$ mit eigenen Meßgliedern bzw. Istwerten $X_1$ und $X_2$ für die X-Komponente der Umlaufbewegung vorgesehen, so daß — wie in der Einleitung erläutert — gegebenenfalls keine besondere Führung bzw. Verdrehsicherung der Elektrodenhalterung erforderlich und ein Zwangsgleichlauf von $M_{x1}$ und $M_{x2}$ gegeben ist.

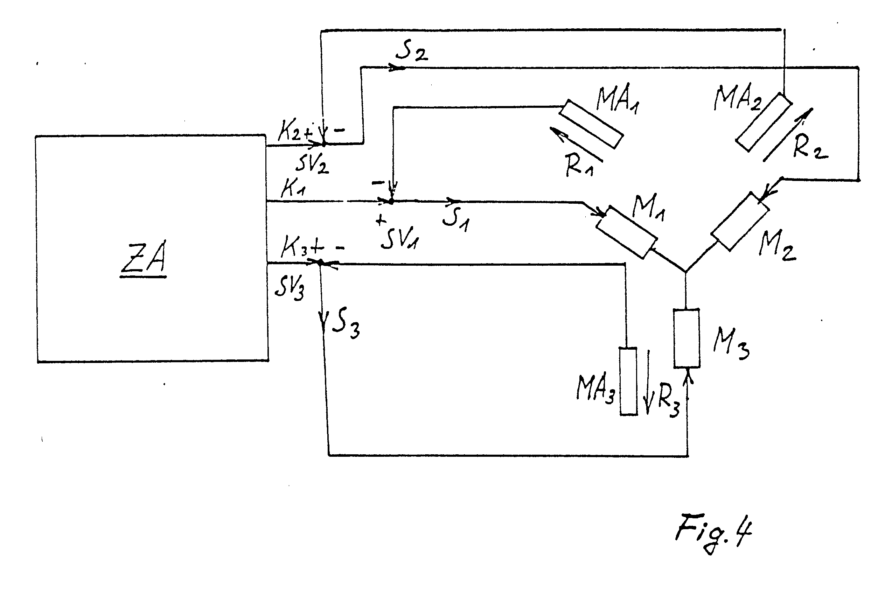

Bei der Ausführung nach Fig. 4 ist die Umlaufbewegung in drei gleichmäßig über 360° verteilte Koordinatenrichtungen $R_1$, $R_2$, $R_3$ aufgelöst, wofür entsprechende Stellmotoren $M_1$ bis $M_3$ und Hilfsregelkreise mit Steuersignalen $S_1$ bis $S_3$ für die Stellmotoren als Ausgangssignale zugehöriger Sollwert-Istwertvergleicher $SV_1$ bis $SV_3$ vorgesehen sind. Die zeitlich gegeneinander entsprechend einer Phasenverschiebung von 120° versetzten Stellungs-Sollwertsignale werden von Ausgangskanälen $K_1$ bis $K_3$ einer gemeinsamen Zeitablaufsteuerung ZA geliefert. Die dreiachsige Koordinatenaufspaltung hat den Vorteil geringerer Regel- und Einstellfehler in den Scheitelbereichen der einzelnen Koordinatensignale.

Bei der abgewandelten Ausführung der Repetitionsschaltung RPS nach Fig. 5 werden aufeinanderfolgende Schrägerosionszyklen jeweils durch eine Rückstellung des Radialspeichers $C_R$ um jeweils einen vergleichsweise kleinen Rückstellschritt ausgelöst. Die Rückstellschritte können dadurch im Vergleich zum jeweiligen Ausgangswert des Radialausschlages $R_i$, der im allgemeinen dem jeweiligen Maximalausschlag bei Erreichen des Sollwertes entsprechend der vorgegebenen Formgebung- oder Hüllfläche entspricht, gering gehalten werden. Dadurch ergibt sich eine beliebig einstellbare Feinheit der Abstufung zwischen den aufeinanderfolgenden Schrägerosionszyklen und damit eine erhöhte Gleichmäßigkeit und Genauigkeit der Formgebungsfläche. Dies ist insbesondere beim Arbeiten mit flächenhaften Elektroden geringer Dicke in Z-Richtung sowie beim Herstellen von konischen Hüllflächen mit hinsichtlich ihrer Mantelfläche nichtformangepaßten Elektroden von Bedeutung, weil die Bearbeitung hier im wesentlichen nur längs einer schmalen Umfangskante der Elektrode erfolgt.

Bei der Schaltung nach Fig. 5 wird hierzu durch das Rückstellsignal r ein passend bemessener oder eingestellter Schrittzähler Ca aktiviert, der ein dem jeweiligen Rückstellschritt entsprechendes Digitalsignal an einen Subtrahiereingang eines digitalen Radialsummiergliedes $SD_R$ liefert. Dem Addiereingang dieses Summiergliedes wird die Ausgangsgröße des Radialzählers $C_R$ zugeführt. Damit ergibt sich die für die Rückstellung verlangte Modifizierung des Radialausschlag-Istwertsignals für die anschließende Formgebungs-Begrenzungsregelung.

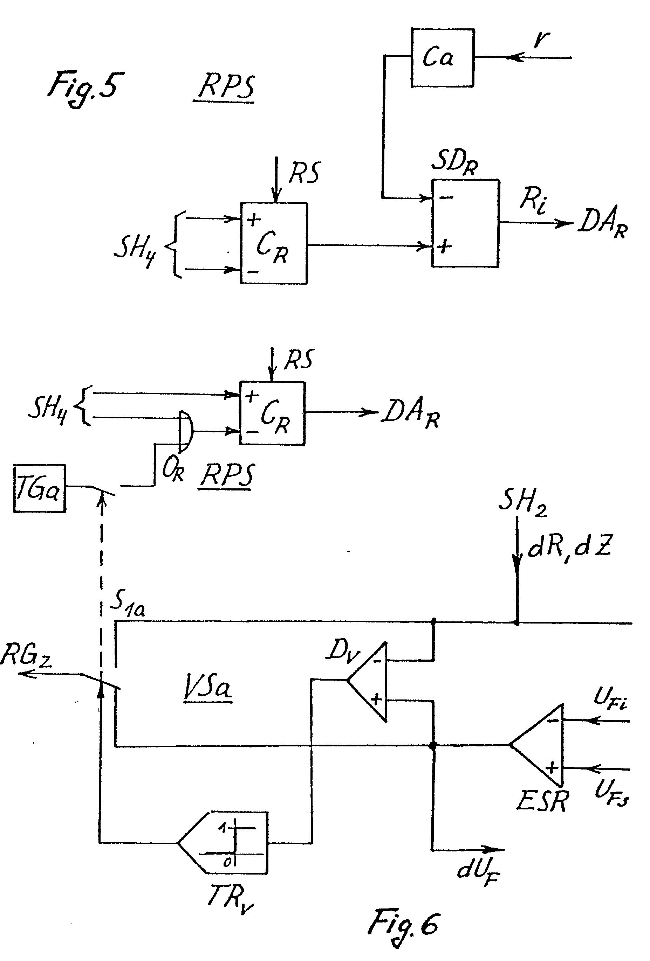

Bei der Ausführung der Repetitionsschaltung RPS nach Fig. 6 ist demgegenüber eine zeitlich fortschreitende Teil-Rückstellung des Radialspeichers $C_R$ zur Einleitung jeweils neuer Schrägerosionszyklen nach Sollwert-Istwertannäherung der Formgebungs-Begrenzungsregelung vorgesehen. Hierzu wird dem Abzähleingang des Speichers $C_R$ von einem vergleichsweise langsam schaltenden Taktgeber $TG_a$ über ein ODER-Gatter $O_R$ ein periodisches Teil-Rückstellsignal zugeführt.

Im Beispielsfall wird diese fortschreitende Teil-Rückstellung in Abhängigkeit von der Annäherung des Istwertes der Radialzustellung an den Sollwert entsprechend der Formgebungs-Begrenzungsregelung aktiviert, und zwar durch einen Kontakt eines Umschalters $S_{1a}$ einer ebenfalls abgewandelten Vergleichsschaltung VSa der überlagerten Formgebungs- und Erosionsspaltregelung. Die Vergleichsschaltung VSa unterscheidet sich von der Ausführung nach Fig. 2b im wesentlichen durch eine verbesserte Vorrangschaltung in Form einer Kleinstwertauswahl für die jeweilig vorrangige Aktivierung des Regelabweichungssignals (Sollwert-Istwertdifferenz) der Formgebungsregelung einerseits oder der Erosionsspaltregelung andererseits. Dazu werden die Regelabweichungssignale dR bzw. dZ einerseits und $dU_F$ andererseits laufend einem Differenzbildner $D_V$ zugeführt, dessen bipolares Analog-Ausgangssignal in einem $0/+1$-Trigger $TR_V$ binärisiert wird und sodann den bereits erwähnten Umschalter $S_{1a}$ steuert. Damit ergibt sich, wie leicht nachzuprüfen ist, eine Kleinstwertauswahl der Regelabweichungen mit ständig aufrechterhaltener Eingriffsmöglichkeit des jeweils aktuellen Kleinstwertes, und zwar des Kleinstwertes im Sinne einer kritischen Sollwert-Istwert-Annäherung oder -Unterschreitung. Dies bedeutet bei Annäherung an den Sollwert mit zunehmendem Radialausschlag, daß die Differenz »Sollwert minus Istwert« Null oder negativ wird. Ebenso bedeutet eine negative Differenz »Sollwert minus Istwert« für die Erosionsspannung, daß sich die Elektrode dem Werkstück zu stark angenähert hat und daher vorrangig zurückgefahren werden muß. In der Schaltung nach Fig. 6 gelangen im übrigen beide Regelabweichungssignale bipolar zur Wirkung auf den Z-Antrieb, sofern gemäß der Kleinstwertauswahl durch den Umschalter $S_{1a}$ aktiviert. Der Trigger $TR_1$ der Schaltung nach Fig. 2b ist bei der Schaltung nach Fig. 6 entbehrlich, er kann jedoch gegebenenfalls durch einen bipolaren Trigger oder einen Verstärker mit unterschiedlichem Verstärkungsgrad für positive und negative Eingangssignale ersetzt werden, was in manchen Fällen eine raschere und genauere Formgebungs-Begrenzungsregelung ermöglicht.

Abschließend ist hervorzuheben, daß die Arbeitsweise mit aufeinanderfolgenden Schrägerosionszyklen gegebenenfalls auch in vereinfachter Form dadurch verwirklicht werden kann, daß die Relativzustellung zwischen Elektrode und Werkstück in der ersten und/oder in der zweiten Arbeitsrichtung, d. h. Z- bzw. R-Richtung, mit einer der Formgebungs-Begrenzungsregelung nachrangig unterlagerten, zeitlich zunehmenden Zusatzkomponente verwirklicht werden kann. Eine solche zeitlich veränderliche Signalkomponente kann beispielsweise unmittelbar in den Z-Antrieb eingeführt werden.

## Patentansprüche

1. Einrichtung zur elektroerosiven, insbesondere funkenerosiven Bearbeitung, mit wenigstens einer Werkzeugelektrode (E) und einer Werkstückelektrode (W), die relativ zueinander in einer ersten Arbeitsrichtung und in einer im Winkel zu dieser angeordneten, zweiten Arbeitsrichtung, insbesondere im Sinne einer translatorischen Umlaufbewegung in einer Querebene zu der ersten Arbeitsrichtung, verfahrbar angeordnet und mit diesen Antriebsrichtungen zugeordneten Antriebs- und Steuereinrichtungen ($RG_z$, KSG, $M_x$, $M_y$, $M_z$) verbunden sind, wobei eine die Antriebs- und Steuereinrichtungen der ersten und zweiten Arbeitsrichtung kuppelnde Zuordnungseinrichtung (ZR) zur Bestimmung von mehrdimensionalen Formgebungsflächen innerhalb der Werkstückelektrode (W) vorgesehen ist, welche mindestens zwei gesonderte Zuordnungs-Funktionsgeber ($ZFG_a$, $ZFG_b$) aufweist, dadurch gekennzeichnet, daß diese Zuordnungs-Funktionsgeber (ZFGa, ZFGb) in zeitlicher Aufeinanderfolge wechselweise in Wirkverbindung auf die Antriebs- und Steuereinrichtungen ($RG_z$, $M_z$ bzw. KSG, $M_x$, $M_y$) geschaltet werden, und daß eine Formgebungs-Begrenzungsregelung (FBR) für die vorrangige Aufschaltung jeweils eines der Zuordnungs-Funktionsgeber (ZFGa) auf die Antriebs- und Steuereinrichtungen vorgesehen ist.

2. Bearbeitungseinrichtung nach Anspruch 1, dadurch gekennzeichnet, daß für die wechselweise Aufschaltung der Zuordnungs-Funktionsgeber (ZFGa, ZFGb) eine in Abhängigkeit von einer Sollwert-Istwertannäherung der Formgebungs-Begrenzungsregelung (FBR) aktivierbare Repetitionsschaltung (RPS) vorgesehen ist.

3. Bearbeitungseinrichtung nach Anspruch 2, dadurch gekennzeichnet, daß eine der Formgebungs-Begrenzungsregelung (FBR) unterlagerte Erosionsspaltregelung (ESR) vorgesehen ist und daß die Repetitionsschaltung (RPS) in Abhängigkeit von einer Sollwert-Istwertannäherung der Formgebungs-Begrenzungsregelung und der Erosionsspaltregelung aktivierbar ist.

4. Bearbeitungseinrichtung nach einem der vorangehenden Ansprüche, dadurch gekennzeichnet, daß eine in einem vorgebbaren Verhältnis zu einem Stellungs-Istwertsignal ($Z_i$) in einer ersten Arbeitsrichtung stehende Grenz-

wertkomponente ($R_{SI}$) für die Zustellung in der zweiten Arbeitsrichtung gebildet und in den Sollwert-Istwert-Vergleich der Formgebungs-Begrenzungsregelung (FBR) eingeführt wird.

5. Bearbeitungseinrichtung nach einem der Ansprüche 2 bis 4, dadurch gekennzeichnet, daß die Repetitionsschaltung (RPS) ein rückstellbares Speicherglied ($C_R$) für den Stellungs-Istwert ($R_i$) in einer Arbeitsrichtung aufweist und daß dieses Speicherglied ($C_R$) in Abhängigkeit vom Erreichen eines vorgegebenen Stellungs-Sollwertes ($R_s$) in dieser Arbeitsrichtung (R) unabhängig von der Zustellung in der anderen Arbeitsrichtung zurückstellbar ist.

6. Bearbeitungseinrichtung nach Anspruch 5, dadurch gekennzeichnet, daß das Istwert-Speicherglied ($C_R$) für eine translatorische Umlaufbewegung in einer Arbeitsrichtungsebene (QE) in Abhängigkeit von der Unterschreitung eines vorgegebenen Grenzwertes ($dR_G$) der zugehörigen Radial-Zustellungs-Sollwert-Istwertdifferenz oder der Unterschreitung eines vorgegebenen Grenzwertes der Erosionsspalt-Sollwert-Istwertdifferenz ($dU_{FG}$) während eines vorgegebenen Mindestwertes ($P_o$) des Umlaufwinkels der translatorischen Umlaufbewegung zurückstellbar ist.

7. Bearbeitungseinrichtung nach Anspruch 5 oder 6, dadurch gekennzeichnet, daß die Rückstellung des Speichergliedes ($C_R$) der Repetitionsschaltung (RPS) für aufeinanderfolgende Schrägerosionszyklen mit jeweils vom Ausgangswert ($R_i$) verschiedenen, vorzugsweise von diesem Ausgangswert unabhängigen, vorgebbaren Rückstellschritten erfolgt.

8. Bearbeitungseinrichtung nach Anspruch 5, dadurch gekennzeichnet, daß das Speicherglied ($C_R$) der Repetitionsschaltung (RPS) einer zeitlich fortschreitenden Teil-Rückstellung zur Einleitung jeweils neuer Schrägerosionszyklen nach Sollwert-Istwertannäherung der Formgebungs-Begrenzungsregelung unterzogen wird.

9. Bearbeitungseinrichtung nach einem der vorangehenden Ansprüche, dadurch gekennzeichnet, daß die Relativzustellung zwischen Werkzeugelektrode und Werkstückelektrode in der ersten und/oder zweiten Arbeitsrichtung mit einer der Formgebungs-Begrenzungsregelung nachrangig unterlagerten, zeitlich zunehmenden Zusatzkomponente versehen wird.

10. Bearbeitungseinrichtung nach einem der vorangehenden Ansprüche, dadurch gekennzeichnet, daß die Antriebs- bzw. Steuervorrichtungen für die Umlaufbewegung Mittel zur Erfassung und/oder Einstellung des Umlaufwinkels und/oder der Umlaufwinkelgeschwindigkeit aufweisen.

11. Bearbeitungseinrichtung nach Anspruch 10, dadurch gekennzeichnet, daß zur Erfassung und/oder zur Einstellung des Umlaufwinkels ein der jeweiligen Winkelstellung der Elektrodenhalterung zugeordnetes Winkel-Istwertsignal ($P_i$) mit einem vorgebbaren Winkel-Sollwertsignal ($P_s$) verglichen und bei wenigstens annähernder Übereinstimmung dieser Signale selbsttätig eine Unterbrechung der translatorischen Umlaufbewegung ausgelöst wird.

12. Bearbeitungseinrichtung nach Anspruch 10 oder 11, dadurch gekennzeichnet, daß in Abhängigkeit vom Radialausschlag der translatorischen Umlaufbewegung und/oder von der Erosionsspaltbreite bzw. der Erosionsspannung ($U_{Fi}$) eine vorzugsweise zur Veränderung der Differenz »Sollwert minus Istwert« der entsprechenden Meßgrößen gegensinnige Änderung der Umlaufwinkelgeschwindigkeit der translatorischen Umlaufbewegung ausgelöst wird.

13. Bearbeitungseinrichtung nach einem der vorangehenden Ansprüche, wobei mindestens zwei Stellmotoren für gegeneinander winkelversetzte Komponenten der Umlaufbewegung und eine gemeinsame Zeitablaufsteuerung mit den verschiedenen Bewegungskomponenten der Stellmotoren zugeordneten Steuerkanälen vorgesehen sind, dadurch gekennzeichnet, daß jeweils mindestens zwei zueinander parallel angeordnete Linear-Stellmotoren ($M_{x1}$, $M_{x2}$) für eine Komponente der zweiten Arbeitsbewegung vorgesehen sind.

14. Bearbeitungseinrichtung nach Anspruch 13, dadurch gekennzeichnet, daß die Zeitablaufsteuerung (ZA) einen mechanischen Kreisbahn-Steuersignalgenerator ($KSG_s$) mit rotierendem Phasenwinkel- und Radiusgeber sowie mit mindestens zwei im Winkel zueinander angeordneten und mit dem Phasenwinkel- und Radiusgeber in Abtastverbindung stehenden Weg-Meßwertaufnehmern ($MA_X$, $MA_Y$) für die Erzeugung von Weg-Steuersignalen bzw. -Sollwertsignalen aufweist.

15. Bearbeitungseinrichtung nach einem der vorangehenden Ansprüche, dadurch gekennzeichnet, daß die Sollwert-Istwertdifferenz der Erosionsspannung ($dU_F$) bzw. der Erosionsspaltbreite einerseits und der Zustellung der ersten bzw. zweiten Arbeitsbewegung (dZ, dR) oder einer kombinierten Arbeitsbewegung andererseits in Abhängigkeit von ihrem Größenverhältnis derart überlagert sind, daß jeweils die der kritischsten Regelabweichung entsprechende Sollwert-Istwertdifferenz vorrangig eine Beendigung oder Umkehr der in Zustellrichtung verlaufenden Arbeitsbewegung auslöst.

**Claims**

1. Apparatus for electro-erosion, especially spark-erosion treatment, having at least one tool electrode (E) and one workpiece electrode (W), which are arranged so as to be movable relatively to each other in a first working direction and in a second working direction arranged at an angle thereto, especially in the sense of a translatory, orbital motion in a plane transverse to the first working direction, and connected to drive and control means ($RG_z$, KSG, $M_x$, $M_y$, $M_z$) assigned to these driving directions, in which allocating control means (ZR) connected to the drive and control means for the first and for the second working direction are provided for determining multi-dimensional shaped surfaces within the workpiece electrode (W), which include at least two separate allocating control function generators (ZFG$_a$, ZFG$_b$), characterised in that these allocating control function generators (ZFG$_a$, ZFG$_b$), ara connected in time sequence in turn to the drive and control means (RG$_z$, M$_z$ and KSG, M$_x$, M$_y$), and that a shape-limit control (FBR) is provided for priority connection of one of the allocating control function generators (ZFG$_a$) to the drive and control means.

2. Apparatus according to claim 1, characterised in that a repeater switch (RPS), activatable in dependence on the convergence of a nominal value and an actual value of the shape-limit control (FBR), is provided for the sequential connection of the allocating control function generators (ZFG$_a$, ZFG$_b$).

3. Apparatus according to claim 2, characterised in that an erosion gap control (ESR) is provided backing up the shape-limit control and that the repeater switch (RPS) is activatable in dependence on a convergence of a nominal value and an actual value of the shape-limit control and the erosion gap control.

4. Apparatus according to any of the preceding claims, characterised in that a limiting value (R$_{sl}$) is formed, standing in predetermined relation to a position-actual value signal (Z$_i$) in a first working direction, for the adjustment in the second working direction, and is entered for nominal-actual value comparison of the shape-limit control (FBR).

5. Apparatus according to any of claims 2 to 4, characterised in that the repeater switch (RPS) has a resettable register (C$_R$) for the position-actual value (R$_i$) in one working direction and that this register (C$_R$) is resettable in dependence on attainment of a predetermined position-nominal value (R$_S$) in this working direction (R) independently of the adjustment in the other working direction.

6. Apparatus according to claim 5, characterised in that the actual value register (C$_R$) for a translational orbital motion in one working direction (QE) is resettable in dependence on the shortfall of a predetermined limiting value (dR$_G$) of the relevant radial adjustment nominal-actual value difference or the shortfall of a predetermined limiting value of the erosion gap nominal-actual value difference (dU$_{FG}$) during a predetermined least value (P$_o$) of the orbital angle of the translational orbital motion.

7. Apparatus according to claim 5 or claim 6, characterised in that the resetting of the register (C$_R$) of the repeater switch (RPS) for successive inclined erosion cycles is effected with predetermined resetting steps different from the starting value (R$_i$), preferably independent of this starting value.

8. Apparatus according to claim 5, characterised in that the register (C$_R$) for the repeater switch (RPS) is subject to an ongoing partial-resetting for initiating a new inclined erosion cycle according to a convergence of nominal and actual values of the shape-limit control.

9. Apparatus according to any of the preceding claims, characterised in that the relative adjustment between tool electrode and workpiece electrode in the first and/or second working direction is given an additional component increasing with time, backing up the subsidiary shape-limit control.

10. Apparatus according to any of the preceding claims, characterised in that the drive and control devices for the orbital motion have means for detecting and/or adjusting the orbital angle and/or the orbital angular velocity.

11. Apparatus according to claim 10, characterised in that for detecting and/or adjustment of the orbital angle an angle-actual value singal (Pi) related to the respective angular position of the electrode holders is compared with a predetermined angle-nominal value signal (Ps) and an interruption of the translatory orbital motion is automatically effected upon an at least close agreement between these signals.

12. Apparatus according to claim 10 or claim 11, characterised in that an alteration in the orbital angular velocity of the translatory motion is produced in dependence on the radial displacement in the translatory orbital motion and/or on the erosion gap width or the erosion potential (U$_{Fi}$) preferably in the opposite sense to the change in the difference »nominal value minus actual value« of the corresponding quantities.

13. Apparatus according to any of the preceding claims, in which at least two servomotors for oppositely angularly displaced components of the orbital motion and a common time-lapse control with control channels assigned to the different components of motion of the servomotors are provided, characterised in that at least two parallelly arranged linear servomotors (M$_{x1}$, M$_{x2}$) for one component of the second working motion, are provided.

14. Apparatus according to claim 13, characterised in that the time-lapse control (ZA) has a mechanical orbit control signal generator (KSG$_s$) with rotary phase angle and radius generator and also at least two path length sensors (MA$_x$, MA$_y$) angularly spaced in sensing connection with the phase angle and radius generator for the production of path control signals and nominal value signals, respectively.

15. Apparatus according to any of the preceding claims, characterised in that the nominal-actual value difference of the erosion voltage (dU$_F$) or the erosion gap width on the one hand and of the adjustment of the first or the second working motion (dZ, dR) or a combined working motion on the other hand are so overlapped in dependence on their relative values that the nominal-actual value difference corresponding to the most critical departure from control effects on a priority basis a termination or a reversal of the working motion in the adjustment direction.

## Revendications

1. Dispositif d'usinage par électroérosion, en particulier par étincelage, comportant au moins une électrode-outil (E) et une électrode-pièce (W), disposées de manière mobile l'une par rapport à l'autre dans une première direction de travail et dans une deuxième direction de travail inclinée par rapport à la première, en particulier dans le sens d'un mouvement de rotation translatoire dans un plan orthogonal à la première direction de travail, et reliées à des dispositifs d'entraînement et de commande (RG$_z$, KSG, m$_x$, m$_y$ m$_z$) associés aux directions de travail, tandis qu'un dispositif d'affectation (ZR) couplant les dispositifs d'entraînement et de commande de la première et de la deuxième directions de travail, pour la détermination de surfaces de façonnage pluridimensionnelles, est prévu à l'intérieur de l'électrodepièce (W), laquelle présente au moins deux générateurs de fonctions d'affectation distincts (ZFG$_a$, ZFG$_b$), caractérisé par le fait que ces générateurs de fonctions d'affectation (ZFG$_a$, ZFG$_b$) sont mis alternativement en succession dans le temps en liaison active avec les dispositifs d'entraînement et de commande (RG$_z$, M$_z$ ou KSG, M$_x$, M$_y$), et par le fait qu'un réglage de façonnage et de délimitation (FBR) est prévu pour mettre à chaque fois en ligne prioritairement l'un des générateurs de fonctions d'affectation (ZFGa) sur les dispositifs d'entraînement et de commande.

2. Dispositif d'usinage selon la revendication 1, caractérisé par le fait que pour la mise en ligne alternative des générateurs de fonctions d'affectation (ZFGa, ZFGb) il est prévu un circuit de répétition (RPS) activable en fonction d'une convergence entre la valeur de consigne et la valeur effective du réglage de façonnage et de délimitation (FBR).

3. Dispositif d'usinage selon la revendication 2, caractérisé par le fait qu'il est prévu un réglage de gap d'érosion (ESR) subordonné au réglage de façonnage et de délimitation (FBR) et par le fait que le circuit de répétition (RPS) est activable en fonction d'une convergence entre la valeur de consigne et la valeur effective du réglage de façonnage et de délimitation et du réglage de gap d'érosion.

4. Dispositif d'usinage selon l'une des revendications 1 à 3, caractérisé par le fait qu'une composante de valeur limite (R$_{s1}$) dans un rapport prédéterminable avec un signal de valeur effective de position (Z$_i$), dans une première direction de travail est formée pour l'affectation dans la deuxième direction de travail et est introduite dans la comparaison entre la valeur de consigne et la valeur effective du réglage de façonnage et de délimitation (FBR).

5. Dispositif d'usinage selon l'une des revendications 2 à 4, caractérisé par le fait que le circuit de répétition (RPS) présente un élément (C$_R$) de mémoire effaçable de la valeur de position effective (R$_i$) dans une direction de travail et par le fait que cet élément de mémoire (C$_R$), est effaçable lorsque l'on atteint une valeur de consigne de position pré-établie (R$_s$) dans cette même direction de travail (R), indépendamment de l'avance dans l'autre direction de travail.

6. Dispositif d'usinage selon la revendication 5, caractérisé par le fait que l'élément de mémoire (C$_R$) de valeur effective pour un mouvement de rotation translatoire dans un plan de direction de travail (QE) est effaçable lorsque l'on reste en dessous d'une valeur limite prédéterminée (dR$_G$) de la différence entre la valeur de consigne et la valeur effective d'avance radiale, ou lorsque l'on reste en dessous d'une valeur limite prédéterminée de la différence entre la valeur effective et la valeur de consigne du gap d'érosion (dU$_{FG}$), pendant une valeur minimale prédéterminée (P$_o$) de l'angle de rotation du mouvement de rotation translatoire.

7. Dispositif d'usinage selon les revendications 5 ou 6, caractérisé par le fait que l'effacement de l'élément de mémoire (C$_R$) du circuit de répétition (RPS) s'effectue pour des cycles successifs d'érosion oblique par des étapes d'effacement prédéterminables, différant chacune de la valeur d'origine (R$_i$) et de préférence indépendantes de cette valeur d'origine.

8. Dispositif d'usinage selon la revendication 5, caractérisé par le fait que l'élément de mémoire (C$_R$) du circuit de répétition (RPS) est soumis à un effacement partiel progressif dans le temps en vue de l'introduction à chaque fois de nouveaux cycles d'érosion oblique après convergence entre la valeur effective et la valeur de consigne du réglage de façonnage et de délimitation.

9. Dispositif d'usinage selon l'une des revendications 1 à 8, caractérisé par le fait que l'avance relative entre l'électrode-outil et l'électrodepièce dans la première et/ou la deuxième direction de travail est pourvue d'une composante supplémentaire croissant dans le temps subordonnée au réglage de façonnage et de délimitation.

10. Dispositif d'usinage selon l'une queconque des revendications 1 à 9, caractérisé par le fait que les dispositifs d'entraînement ou de commande du mouvement de rotation présentent des moyens pour détecter et/ou régler l'angle de rotation et/ou la vitesse de l'angle de rotation.

11. Dispositif d'usinage selon la revendication 10, caractérisé par le fait que pour détecter et/ou régler l'angle de rotation, un signal (P$_i$) de valeur effective de l'angle associé à chaque position angulaire du support d'électrodes est comparé avec un signal (P$_s$) de valeur de consigne d'angle prédéterminable et par le fait que lors d'une concordance, même approximative, de ces signaux, on déclenche automatiquement une interruption du mouvement de rotation translation.

12. Dispositif d'usinage selon les revendications 10 ou 11, caractérisé par le fait qu'en fonction de la déviation radiale du mouvement de rotation translatoire et/ou de la largeur du gap d'érosion ou de la tension d'érosion (U$_{Fi}$), on dé-

clenche une variation en sens contraire de la vitesse de l'angle de rotation du mouvement de rotation translatoire, de préférence pour modifier la différence »valeur de consigne moins valeur effective« des grandeurs mesurées correspondantes.

13. Dispositif d'usinage selon l'une quelconque des revendications 1 à 12, dans lequel au moins deux moteurs de commande sont prévus pour des composantes décalées angulatoirement l'une par rapport à l'autre du mouvement de rotation, ainsi qu'une commande commune de déroulement séquentiel comportant les différentes composantes des canaux de commande associés aux moteurs, caractérisé par le fait qu'à chaque fois au moins deux moteurs linéaires ($M_{x1}$, $M_{x2}$) disposés parallèlement l'un à l'autre sont prévus pour une composante du deuxième mouvement de travail.

14. Dispositif d'usinage selon la revendication 13, caractérisé par le fait que la commande de déroulement séquentiel (ZA) présente un générateur ($KSG_s$) mécanique de signal de commande de la voie circulaire, équipé d'un générateur tournant du rayon et de l'angle de phase ainsi que d'au moins deux capteurs de valeur mesurée du trajet ($MA_X$, $MA_Y$) décalés angulairement l'un par rapport à l'autre et en relation de palpage avec le générateur de rayon et d'angle de phase, pour la génération de signaux de commande du trajet ou de signaux de valeur de consigne.

15. Dispositif d'usinage selon l'une quelconque des revendications précédentes, caractérisé par le fait que la différence entre la valeur effective et la valeur de consigne est superposée à la tension d'érosion ($dU_F$) ou la largeur du gap d'érosion d'une part et à l'avance du premier ou du deuxième mouvement de travail ($dZ$, $dR$) ou d'un mouvement de travail combiné d'autre part en fonction du rapport entre ces grandeurs, de manière que, à chaque fois la différence entre la valeur effective et la valeur de consigne correspondant à l'écart de réglage le plus critique déclenche prioritairement un achèvement ou une inversion du mouvement de travail en cours dans la direction d'avance.

Fig. 1

Fig. 2a

Fig.2b

Fig.3

ZA

$MA_y$

$MA_X$

$KSG_m$

$S_y$  $Y$

$M_y$

EH

$M_{x1}$

$M_{x2}$

$S_x$  $X_1$

$S_x$  $X_2$

0 034 311

Fig. 4

0 034 311

Fig.5　　　_RPS_

Fig.6